Europäisches Patentamt

European Patent Office

Office européen des brevets

(19)

(11) **EP 1 320 145 A1**

(12) **DEMANDE DE BREVET EUROPEEN**

(43) Date de publication:
**18.06.2003 Bulletin 2003/25**

(51) Int Cl.$^7$: **H01Q 1/12**, G01S 3/44

(21) Numéro de dépôt: **02102698.4**

(22) Date de dépôt: **06.12.2002**

(84) Etats contractants désignés:
**AT BE BG CH CY CZ DE DK EE ES FI FR GB GR
IE IT LI LU MC NL PT SE SI SK TR**
Etats d'extension désignés:
**AL LT LV MK RO**

(30) Priorité: **11.12.2001 FR 0115988**

(71) Demandeur: **Thales
75008 Paris (FR)**

(72) Inventeur: **Auger, Gérard,
c/o Thales Intellectual Property
94117 ARCUEIL CEDEX (FR)**

(74) Mandataire: **Lucas, Laurent Jacques et al
Thales Intellectual Property,
13, avenue du Président Salvador Allende
94117 Arcueil Cedex (FR)**

(54) **Procédé et dispositif de pointage d'antenne**

(57) Procédé et système antennaire permettant le pointage d'au moins une antenne par rapport à une ou plusieurs autres antennes, une des antennes étant une antenne d'émission ayant un faisceau d'ouverture $\theta_e$ associé à une vitesse de rotation $R_e$, pour couvrir un secteur angulaire Se émettant un signal tous les $T_b$ secondes et une des antennes une antenne de réception ayant un faisceau d'ouverture $\theta_r$ associé à une vitesse de rotation Rr pour couvrir un secteur angulaire $S_r$ comportant au moins les étapes suivantes

- sélectionner les paramètres

  - $\theta_r/R_r \geq T_b$,
  - $\theta_e/R_e \geq T_b$,
  - $R_r$ supérieur à $R_e$ ou $R_e$ supérieur à $R_r$

- déterminer la puissance maximale représentative de la meilleure réception de l'antenne pour différentes positions de l'antenne d'émission ou de l'antenne de réception, et
- déduire la valeur angulaire optimale de positionnement de l'antenne d'émission par rapport à l'antenne de réception.

FIG.5

**Description**

La présente invention concerne un procédé et un dispositif permettant notamment le positionnement d'antennes entre elles.

Elle est utilisée, par exemple, pour pointer une antenne d'une station de réception ou d'une station de réception et d'émission vers une station d'émission ou une station d'émission et de réception.

Elle trouve son application pour des systèmes fonctionnant dans le domaine des fréquences supérieures ou égales au moins à quelques Giga Hertz, dans les bandes de fréquence 4,4-5 GHz et 40 GHz et aussi dans les systèmes à haut débit par exemple de l'ordre de 10 à 50 Mbits/s.

Elle s'applique à des antennes à pointage électronique ou mécanique, pour des stations comportant une antenne d'émission et une antenne de réception, ou encore une antenne d'émission ou une antenne de réception, ou encore une antenne d'émission-réception.

L'art antérieur divulgue différents systèmes mettant en oeuvre des dispositifs de pointage de l'antenne d'une station de réception ou d'une station de réception et d'émission, vers une station d'émission ou d'émission et de réception.

Les dispositifs connus sont en général « dissymétriques », c'est-à-dire que toutes les stations ne sont pas identiques, l'une pouvant être fixe et les autres orientables. Parmi les dispositifs dissymétriques, les plus connus sont probablement ceux qui servent à pointer l'antenne d'une station terrestre vers un satellite de communication.

D'autres systèmes comportent une ou plusieurs antennes omnidirectionnelles utilisées par exemple lors de la phase d'initialisation. Ces dernières sont capables d'émettre ou de recevoir des signaux d'initialisation du pointage des antennes directives qui serviront pour transférer des informations et pour calculer leur position optimale. De telles antennes présentent toutefois certains inconvénients. Par exemple, leur gain peut s'avérer insuffisant dans certaines conditions de fonctionnement. Elles présentent d'autre part un encombrement supplémentaire.

Dans la suite de la description, l'expression « vitesse de rotation du faisceau d'antenne » est utilisée quel que soit le type d'antenne pour désigner, par exemple, une vitesse de rotation mécanique pour des antennes montées sur des supports mécaniques, une vitesse de commutation des colonnes ou des groupes de colonnes de patch activés pour former le faisceau pour des antennes à balayage électronique.

L'invention concerne un procédé pour positionner au moins une antenne par rapport à une ou plusieurs autres antennes, une des antennes étant une antenne d'émission AE ayant un faisceau d'ouverture $\theta_e$ associé à une vitesse de rotation $R_e$, pour couvrir un secteur angulaire $S_e$ émettant un signal tous les $T_b$ secondes et une autre antenne de réception AR ayant un faisceau d'ouverture $\theta_r$ associé à une vitesse de rotation $R_r$ pour couvrir un secteur angulaire $S_r$ caractérisé en ce qu'il comporte au moins les étapes suivantes :

- sélectionner les paramètres $\theta_e$, $\theta_r$, $R_r$, $R_e$, tels que :

  - $\theta_r/R_r \geq Tb$,
  - $\theta_e/R_e \geq T_b$,
  - $R_r$ supérieur à $R_e$ ou $R_e$ supérieur à $R_r$

- déterminer au moins un paramètre représentatif de la meilleure réception de l'antenne pour différentes positions de l'antenne d'émission ou de l'antenne de réception, et

- déduire la valeur optimale de positionnement de l'antenne de réception par rapport à l'antenne d'émission ou de l'antenne d'émission par rapport à l'antenne de réception.

Le paramètre représentatif de la meilleure réception de l'antenne est par exemple la puissance maximale reçue.

Les paramètres $\theta_e$, $\theta_r$, $R_r$, $R_e$, peuvent être choisis pour satisfaire au moins l'une des relations suivantes :

$$\theta_r/R_r \geq S_e/R_e.$$

ou

$$\theta_e/R_e \geq S_r/R_r.$$

Le signal de balise émis inclus par exemple un paramètre permettant l'identification d'une station comportant l'antenne d'émission.

L'invention concerne aussi un système de positionnement d'une antenne par rapport à une autre antenne comprenant au moins une antenne d'émission ayant un faisceau d'ouverture $\theta_e$ associé à une vitesse de rotation $R_e$, pour couvrir un secteur angulaire $S_e$, l'antenne d'émission émettant un signal tous les Tb secondes et une antenne de réception ayant un faisceau d'ouverture $\theta_r$ associé à une vitesse de rotation $R_r$ pour couvrir un secteur angulaire $S_r$, lesdites antennes étant en liaison avec un dispositif adapté à faire varier la vitesse de rotation des faisceaux, caractérisé en ce qu'il comporte au moins :

- un dispositif relié à l'antenne d'émission et adapté à générer un signal d'émission,
- un dispositif adapté à acquérir les différents signaux reçus par l'antenne de réception et à traiter les différentes informations pour en déduire les coordonnées de positionnement optimum de deux antennes l'une par rapport à l'autre,

- un dispositif de gestion des paramètres de vitesse de rotation des faisceaux tel que :

$$\theta_r / R_r \geq T_b,$$

$$\theta_e / R_e \geq Tb,$$

$R_r$ est supérieur à $R_e$ ou $R_e$ est supérieur à $R_r$.

La présente invention présente notamment les avantages suivants :

- toutes les stations disposent d'un même équipement et mettent en oeuvre des procédures identiques ou sensiblement identiques pour initialiser le pointage des antennes,
- l'établissement d'une liaison entre deux stations quelconques d'un réseau« ad hoc » (terme connu de l'Homme du métier) est rendu possible,
- du fait de l'absence d'antennes omnidirectionnelles, les risques de création de brouillage ou de gêne par des interférences sont minimisés, et il n'est pas nécessaire d'utiliser un mode de transmission spécifique pour compenser la réduction de gain résultante.

D'autres caractéristiques et avantages de l'invention apparaîtront mieux à la lecture de la description qui suit, donnée à titre illustratif et nullement limitatif en regard des figures annexées qui représentent :

- La figure 1 un synoptique d'un exemple de dispositif selon l'invention comportant une antenne d'émission et une antenne de réception équipant chacune deux stations distinctes,
- Les figures 2A et 2 B respectivement les ouvertures des lobes des antennes d'émission et de réception,
- Les figures 3A et 3B la réponse en sortie du récepteur de l'antenne de réception respectivement pour $R_r > R_e$ et $R_e > R_r$,
- La figure 4 un exemple de synchronisation temporelle au moyen d'une trame,
- La figure 5 un organigramme présentant différentes étapes mises en oeuvre dans le procédé, et
- La figure 6 un exemple d'un système antennaire comprenant plusieurs antennes empilées.

Afin de mieux faire comprendre le principe mis en oeuvre dans l'invention, l'exemple donné par la suite à titre illustratif et nullement limitatif concerne un système de radiocommunication comprenant une première station équipée d'une antenne d'émission $A_{E1}$ et d'une antenne de réception $A_{R1}$ et une seconde station équipée de la même façon ou de façon similaire.

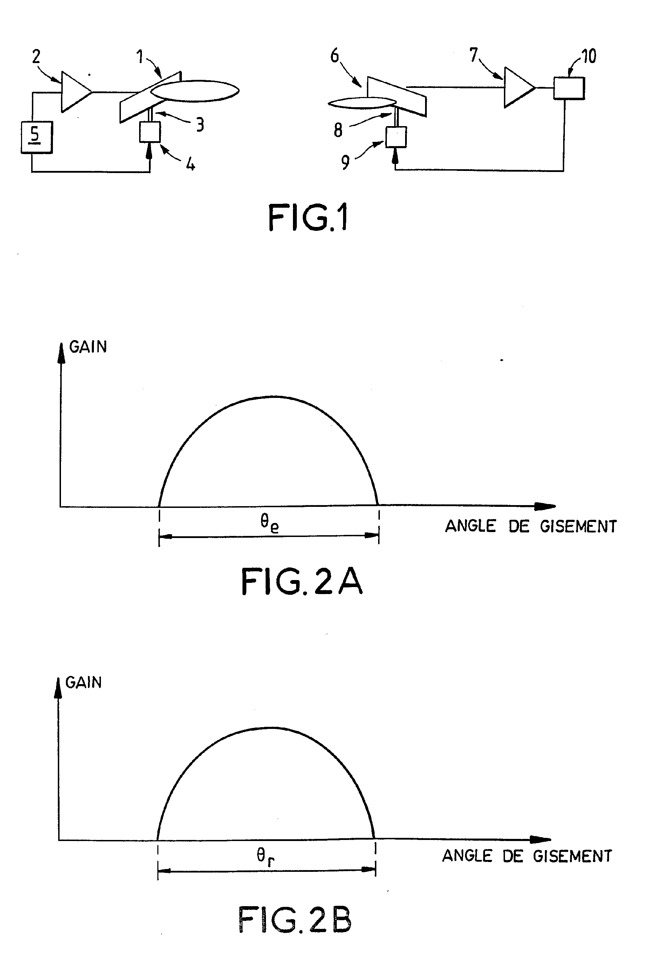

Sur la figure 1, une antenne d'émission 1 en liaison avec un émetteur 2 est montée sur un support mécanique 3 relié à un moteur 4 qui permet sa rotation par exemple dans un plan horizontal. Cette antenne est dotée d'un faisceau d'ouverture horizontale $\theta_e$ en gisement (figure 2A), animé d'un mouvement rotatif de vitesse égale à $R_e$ rad/s dans le plan horizontal. Un microprocesseur 5 permet notamment de commander le moteur 4 et aussi de générer un signal, par exemple une balise de récurrence Tb.

L'antenne de réception 6 associée à un récepteur 7 est elle-même montée sur un support mécanique 8 permettant sa rotation au moyen d'un moteur 9 dans un plan horizontal ou sensiblement horizontal. Le faisceau de l'antenne de réception est un faisceau d'ouverture horizontale $\theta_r$ rd en gisement (figure 2B). Ce faisceau est animé d'un mouvement rotatif dans le plan horizontal avec une vitesse égale à $R_r$ rad/s. Un microprocesseur 10 reçoit les informations issues du récepteur 7, notamment la puissance du signal reçu. Il contrôle aussi la vitesse de rotation du moteur 9 et ses positions. Au cours de la rotation de l'antenne de réception, le microprocesseur 10 détermine par exemple la meilleure position de réception. Le microprocesseur est aussi adapté pour transmettre certaines commandes au moteur, telle que la commande permettant de trouver la meilleure position. Plusieurs techniques sont envisageables.

Le moteur peut être un moteur pas à pas et les positions de l'antenne être repérées par le nombre de pas effectués à partir d'une position de référence.

Le moteur peut être un moteur continu alimenté à l'aide d'un courant constant ou sensiblement constant. Le moteur tourne ainsi à vitesse constante et les positions de l'antenne sont repérées par exemple en utilisant le temps écoulé depuis un instant de référence.

Le mouvement de rotation de l'antenne s'effectue par exemple de manière continue et dans le même sens. Il couvre par exemple un secteur angulaire dans lequel les stations à contacter sont explorées alternativement dans le sens direct et dans le sens rétrograde. Ceci permet notamment, d'assurer un balayage complet des secteurs angulaires égaux respectivement à $S_e$ rad et $S_r$ rad, d'éviter de détériorer les fils de liaison ou de compliquer le montage par la présence de joints tournants. Le secteur angulaire exploré est supérieur ou égal à 360°, afin de s'affranchir des directions sous lesquelles les stations à contacter sont vues.

Dans le cas d'une antenne à balayage électronique, la vitesse de rotation est assurée par exemple au moyen d'un réseau de déphaseurs commandés électroniquement selon la direction souhaitée pour les faisceaux, en utilisant des principes connus de l'Homme du métier.

La durée $t_v$ de visibilité d'une deuxième station à partir d'une station équipée d'une antenne de largeur de faisceau égale à $\theta$ rad et animée d'une vitesse de rotation R rad/s est égale à $\theta/R$ secondes.

Selon un mode de réalisation du procédé, toutes les stations sont équipées à l'identique d'une antenne d'émission de largeur de faisceau $\theta_e$ animée d'une vitesse de rotation $R_e$ et d'une antenne de réception de largeur de faisceau $\theta_r$ animée d'une vitesse de rotation $R_r$. Une deuxième station distante reste donc en visibilité d'une première station :

- Par son antenne de réception pendant un temps $t_r$ égal à $t_r = \theta_r/R_r$ exprimé en secondes par exemple,
- Par son antenne d'émission pendant un temps égal $t_e$ à $t_e = \theta_e/R_e$ s.

Pour qu'une première station puisse recevoir une balise de récurrence $T_b$ (s) en provenance d'une deuxième station, il faut que simultanément l'antenne d'émission de la deuxième station soit en visibilité de la première station et que l'antenne de réception de la première station soit en visibilité de la deuxième station. Ceci conduit à satisfaire les relations suivantes :

**Condition 1**

$$t_r = \theta_r/R_r \geq T_b \qquad (1)$$

$$t_e = \theta_e/R_e \geq T_b \qquad (2)$$

**Condition 2**

La direction sous laquelle est vue une autre station est comprise dans les secteurs angulaires des faisceaux $S_e$ et $S_r$, ce qui s'exprime aussi par

$$S_e \geq 2\pi \text{ et } S_r \geq 2\pi \qquad (3)$$

**Condition 3**

La vitesse de rotation de l'une des antennes doit être inférieure à la vitesse de rotation de l'autre antenne, ce qui se traduit de la manière suivante :

- ■ Dans le cas où la rotation de l'antenne de réception est plus lente que celle de l'antenne d'émission : l'antenne d'émission doit par exemple avoir balayé la totalité de son secteur pendant qu'elle est éclairée par l'antenne de réception d'une autre station, la réception d'une balise étant assurée si :

$$\theta_r/R_r \geq S_e/R_e \qquad (4)$$

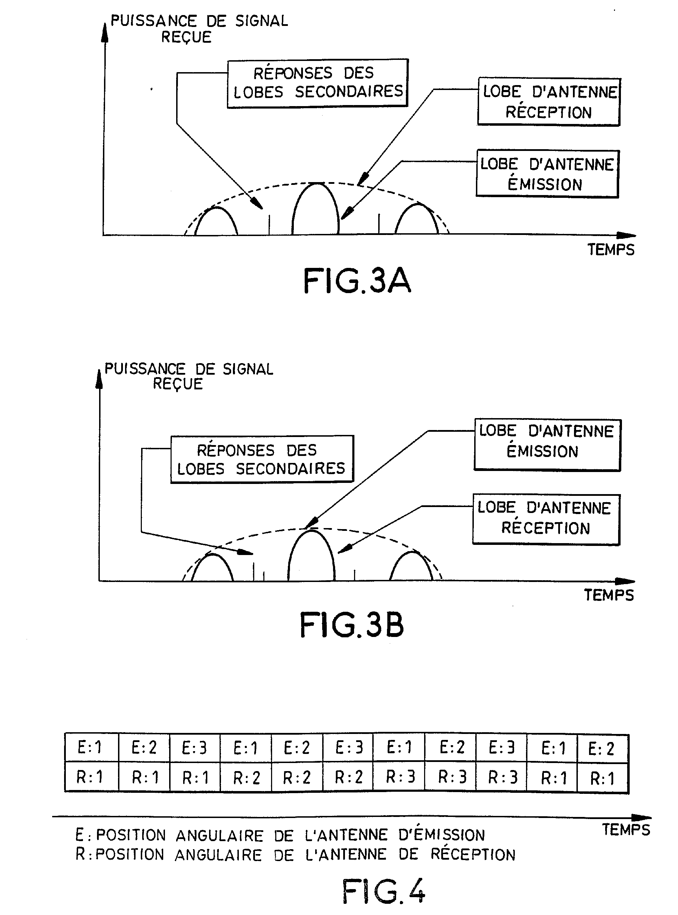

La figure 3A représente la réponse en sortie du récepteur ou la puissance du signal reçu dans le cas où la rotation de l'antenne d'émission s'effectue avec une vitesse supérieure à la rotation de l'antenne de réception.

- ■ Lorsque c'est l'antenne d'émission qui possède un mouvement de rotation plus lent que celui de l'antenne de réception, l'antenne de réception doit par exemple avoir balayé la totalité de son secteur pendant qu'elle est éclairée par l'antenne d'émission d'une autre station.

$$\theta_e/R_e \geq S_r/R_r \qquad (5)$$

La figure 3B représente la puissance du signal reçu lorsque l'antenne de réception a une vitesse de rotation supérieure à celle de l'antenne d'émission.

Les secteurs angulaires $S_e$ et $S_r$ d'une station couvrent la direction dans laquelle sont vues les stations avec lesquelles des liaisons doivent être établies. Ainsi après un temps maximal égal à $S_r/R_r$ ou $S_e/R_e$, chaque station a pu recevoir au moins une balise en provenance des stations qui se trouvent à portée radioélectrique.

En particulier, les positions des faisceaux des antennes sont par exemple synchronisées sur une trame temporelle telle que celle décrite à la figure 4. Cette trame définit, à chaque instant, un couple (E, R) de positions angulaires pour les antennes d'émission et pour les antennes de réception. Ceci garantit que, pour chacune des positions possibles de l'antenne d'émission, l'antenne de réception a été simultanément placée dans toutes ses positions possibles. De plus, au moins un signal de balise doit être transmis dans chaque créneau de durée $t_f$, ce qui est en particulier facilement réalisé si $t_f = T_b$. $t_f$ est la durée pendant laquelle le faisceau d'une antenne est maintenu sur une même position.

Ces conditions données dans le cas d'antennes d'émission et d'antennes de réception situées dans des stations distinctes restent applicables pour des antennes d'émission et des antennes de réception disposées dans une même station. Elles restent aussi applicables pour des antennes présentant les deux fonctions émission-réception.

Elles s'appliquent pour tout type d'antennes y compris les antennes à balayage électronique et aussi quelque soit l'agencement des stations.

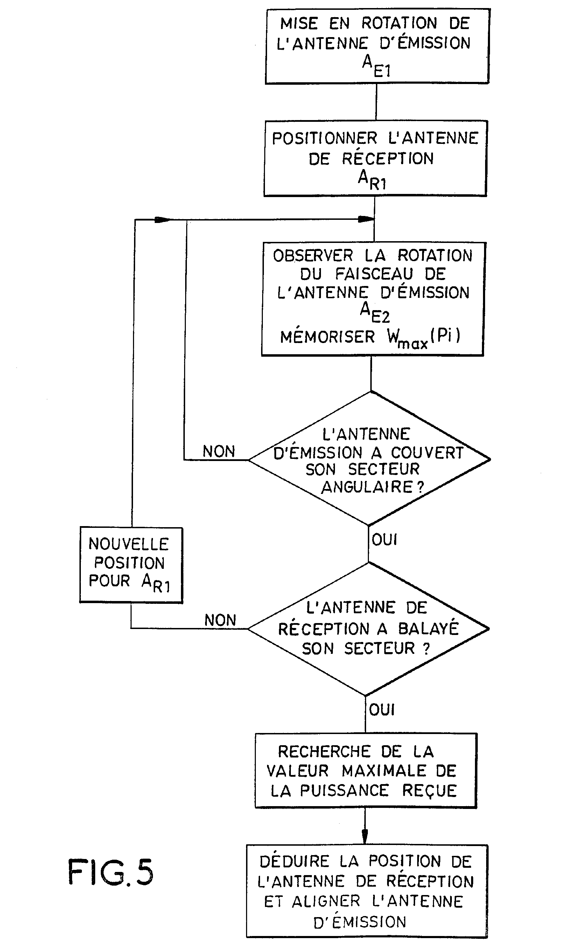

Pour le cas où l'antenne d'émission tourne plus rapidement que l'antenne de réception $R_e > R_r$, le procédé selon l'invention comporte par exemple les étapes décrites en relation avec la figure 5 :

a) le microprocesseur d'une première station envoie un signal de commande au moteur lié à son antenne d'émission $A_{E1}$ pour lui communiquer une vitesse de rotation, $R_e$,

b) le même microprocesseur positionne l'antenne de réception $A_{R1}$ de la première station dans une position donnée Pi,

c) pendant le balayage de l'antenne d'émission $A_{E2}$ d'une deuxième station, le microprocesseur par exemple celui équipant la pemière station mémorise la plus grande valeur de puissance reçue Wmax (Pi) sur l'antenne $A_{R1}$, pour la position Pi,

d) une fois que l'antenne d'émission $A_{E2}$ de la deuxième station a balayé son secteur angulaire $S_e$ en totalité ou au moins en majorité, le microprocesseur envoie un signal de commande vers l'antenne de réception $A_{R1}$ de la première station afin de la faire passer dans une autre position et le procédé réitère les étapes b) et c) jusqu'à ce que l'antenne de réception $A_{R1}$ ait balayé la totalité de son secteur angulaire $S_r$ ou la quasi-totalité de ce secteur angulaire.

A la fin des étapes a) à d), le microprocesseur associé à l'antenne réceptrice de la première station et/ou le microprocesseur associé à l'antenne réceptrice de la deuxième station possède les valeurs des puissances maximales déterminées pour plusieurs positions de l'antenne de réception $A_{R1}$ ou $A_{R2}$.

e) il détermine alors, en utilisant par exemple une méthode de recherche du maximum, la valeur maximale Wmax de la puissance reçue.

f) Connaissant cette valeur maximale Wmax, il en déduit la position optimale pour l'antenne de réception $A_{R1}$ respectivement la position pour l'antenne de réception $A_{R2}$ et la positionne sur cette valeur.

g) L'antenne d'émission $A_{E1}$ ou $A_{E2}$ est ensuite alignée sur l'antenne de réception $A_{R1}$ ou $A_{R2}$.

L'étape d) peut être complétée par une étape de traitement tel qu'un filtrage adapté à réduire ou éliminer les bruits parasites.

L'algorithme de recherche du maximum de puissance est par exemple adapté de façon à détecter les différents maximas locaux des antennes d'émission et de réception, qui correspondent au lobe principal et aux différents lobes secondaires et à conserver le maximum. De cette façon, le secteur du faisceau de l'antenne de réception d'une station est balayé complètement ou pratiquement dans sa totalité, en évitant les positions où la balise est reçue par les lobes secondaires.

Selon une variante de mise en oeuvre, le signal émis par l'antenne d'émission comporte par exemple un indicateur de la station émettrice, la valeur de l'angle de pointage pour un instant donné, la valeur de l'angle d'émission d'une station distante pour laquelle la réception locale est la meilleure.

L'indicatif de la station permet par exemple à une station distante de sélectionner les stations avec laquelle ou avec lesquelles elle souhaite établir une liaison.

La connaissance de la valeur de l'angle $\theta_e$ du faisceau d'émission au moment de l'émission de la balise Tb permet par exemple à une station distante de commander le positionnement ou encore l'arrêt de l'antenne d'émission sur la position préférentielle.

Le paramètre représentatif du meilleur positionnement d'une antenne par rapport à l'autre est par exemple l'angle de pointage. Ce dernier peut être mesuré par rapport à une référence quelconque. La référence est par exemple repérée par rapport à une position du moteur pas à pas ou encore à une position du moteur continu selon le type de moteur utilisé.

La figure 4 schématise une variante de réalisation où les faisceaux d'antennes d'émission et de réception peuvent prendre chacun 3 positions discrètes. Ainsi, si chaque station dispose de la même heure de référence, les positions angulaires des antennes d'émission et/ou de réception peuvent être désignées et distinguées par le numéro du créneau de la trame de référence.

Les stations peuvent s'échanger des informations, par exemple se communiquer les positions angulaires correspondant au maximum de puissance.

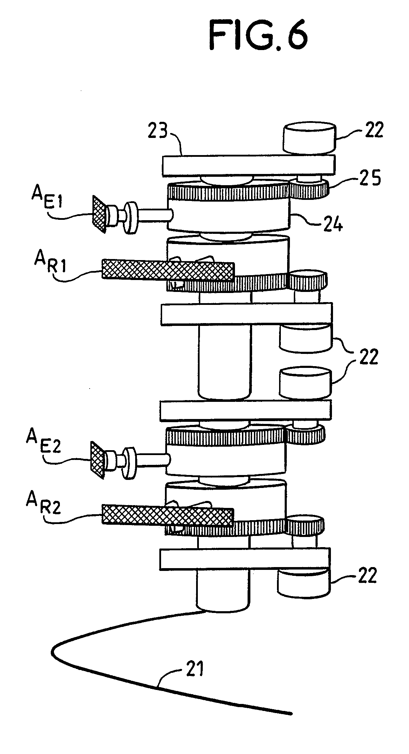

La figure 6 représente un exemple de système antennaire destiné à équiper une station comprenant plusieurs couples d'antennes d'émission et de réception $(A_{Ei}, A_{Ri})$ destinées à établir plusieurs liaisons simultanées (deux liaisons $L_1$ et $L_2$ sur la figure). Le pointage des antennes de chaque couple est réalisé selon le principe de l'invention. Le montage s'effectue par exemple autour d'une colonne fixe 20 creuse à l'intérieur permettant ainsi le passage des câbles 21 d'alimentation et de contrôle des antennes et des moteurs 22. Un moteur 22 est par exemple associé à une antenne. Les moteurs 22 sont fixés par exemple sur des plateaux 23 solidaires de la colonne centrale 20. Les antennes d'émission et de réception sont montées sur des bagues 24 pouvant tourner autour de la colonne centrale 20 et entraînées par les moteurs par l'intermédiaire d'un engrenage 25. A chaque couple d'antenne d'émission-réception sont associés :

- un dispositif adapté à générer un signal d'émission relié à l'antenne d'émission,
- un dispositif adapté à acquérir les différents signaux reçus par l'antenne de réception et à traiter les différentes informations pour en déduire les coordonnées de positionnement optimum de deux antennes l'une par rapport à l'autre,
- un dispositif de gestion des paramètres de vitesse de rotation des faisceaux tel que :

$$\theta_r/R_r \geq Tb,$$

$$\theta_e/R_e \geq T_b,$$

$R_r$ est supérieure à $R_e$ ou $R_e$ est supérieure à $R_r$.

- un dispositif d'alignement des antennes associées à chaque liaison.

## Revendications

**1.** Procédé de pointage d'au moins une antenne par rapport à une ou plusieurs autres antennes, une des antennes étant une antenne d'émission $A_E$ ayant un faisceau d'ouverture $\theta_e$ associé à une vitesse de rotation $R_e$, pour couvrir un secteur angulaire $S_e$ émettant un signal tous les $T_b$ secondes et une autre des antennes une antenne de réception $A_R$ ayant un faisceau d'ouverture $\theta_r$ associé à une vitesse de rotation $R_r$ afin de couvrir un secteur angulaire $S_r$ **caractérisé en ce qu'**il comporte au moins les étapes suivantes

- sélectionner les paramètres $\theta_e$, $\theta_r$, $R_r$, $R_e$, tels que :

  - $\theta_r/R_r \geq T_b$,
  - $\theta_e/R_e \geq T_b$,
  - $R_r$ supérieur à $R_e$ ou $R_e$ supérieur à $R_r$

- déterminer au moins un paramètre représentatif de la meilleure réception de l'antenne pour différentes positions de l'antenne d'émission ou de l'antenne de réception, et
- déduire la valeur optimale de positionnement de l'antenne de réception par rapport à l'antenne d'émission ou de l'antenne d'émission par rapport à l'antenne de réception.

**2.** Procédé selon la revendication 1 **caractérisé en ce que** le paramètre représentatif de la meilleure réception est la puissance reçue, de préférence la puissance maximale.

**3.** Procédé selon la revendication 1 **caractérisé en ce que** l'on choisit :

$$\theta_r/R_r \geq S_e/R_e.$$

**4.** Procédé selon la revendication 1 **caractérisé en ce que** l'on choisit :

$$\theta_e/R_e \geq S_r/R_r.$$

**5.** Procédé selon l'une des revendications 1 à 4 **caractérisé en ce que** le signal de balise émis inclus un paramètre permettant l'identification d'une station comportant l'antenne d'émission.

**6.** Procédé selon l'une des revendications 1 à 5 **caractérisé en ce que** la ou les antennes d'émission et de réception sont distinctes et leurs faisceaux orientés mécaniquement.

**7.** Procédé selon la revendication 6 **caractérisé en ce que** la rotation des faisceaux est effectuée alternativement dans un sens direct et dans un sens rétrograde.

**8.** Procédé selon l'une des revendications 1 à 5 où les antennes d'émission et de réception sont confondues et les faisceaux sont orientés électroniquement.

**9.** Procédé selon l'une des revendications 1 à 8 **caractérisé en ce qu'**il comporte une étape de balayage des secteurs synchronisé sur une trame temporelle, la synchronisation se référant à un couple différent de positions angulaires des faisceaux des antennes de réception et d'émission.

**10.** Procédé selon l'une des revendications 1 à 9 **caractérisé en ce qu'**il comporte une étape d'alignement du faisceau de l'antenne d'émission sur la meilleure position déterminée au moyen de l'antenne de réception.

**11.** Procédé selon l'une des revendications 1 à 10 **caractérisé en ce que** la fréquence d'émission est supérieure à 1 GHz, de préférence est comprise dans la bande 4,4 - 5 GHz, ou dans la bande 40 GHz.

**12.** Procédé selon l'une des revendications 1 à 10 **caractérisé en ce que** le débit des données transmises est compris entre 10 et 50 Mbits/s.

**13.** Système de positionnement d'une antenne par rapport à une autre antenne comprenant au moins une antenne d'émission ayant un faisceau d'ouverture $\theta_e$ associé à une vitesse de rotation $R_e$, pour couvrir un secteur angulaire $S_e$, l'antenne d'émission émettant un signal tous les $T_b$ secondes et une antenne de réception ayant un faisceau d'ouverture $\theta_r$ associé à une vitesse de rotation $R_r$ pour couvrir un secteur angulaire $S_r$, lesdites antennes étant en liaison avec un dispositif adapté à faire varier la vitesse de rotation des faisceaux, **caractérisé en ce qu'**il comporte au moins :

- un dispositif relié à l'antenne d'émission et adapté à générer un signal d'émission,
- un dispositif adapté à acquérir les différents signaux reçus par l'antenne de réception et à traiter les différentes informations pour en déduire les coordonnées de positionnement optimum de deux antennes l'une par rapport à l'autre,
- un dispositif de gestion des paramètres de vitesse de rotation des faisceaux tel que :

$$\theta_r/R_r \geq T_b,$$

$$\theta_e / R_e \geq T_b,$$

$R_r$ est supérieur à $R_e$ ou $R_e$ est supérieur à $R_r$ .

**14.** Système selon la revendication 13 **caractérisé en ce que** les antennes d'émission et de réception sont reliées à des moyens mécaniques pour orienter les faisceaux.

**15.** Système selon la revendication 13 **caractérisé en ce que** les antennes d'émission et de réception sont des antennes à balayage électronique et **en ce qu'**il comporte un dispositif permettant une orientation électronique des faisceaux.

**16.** Système selon la revendication 13 **caractérisé en ce que** les antennes d'émission et de réception sont situées dans une même station et **en ce qu'**il comporte un dispositif d'alignement des deux antennes.

FIG.1

FIG.2A

FIG.2B

PUISSANCE DE SIGNAL
REÇUE

RÉPONSES DES
LOBES SECONDAIRES

LOBE D'ANTENNE
RÉCEPTION

LOBE D'ANTENNE
ÉMISSION

TEMPS

## FIG.3A

PUISSANCE DE SIGNAL
REÇUE

RÉPONSES DES
LOBES SECONDAIRES

LOBE D'ANTENNE
ÉMISSION

LOBE D'ANTENNE
RÉCEPTION

TEMPS

## FIG.3B

| E:1 | E:2 | E:3 | E:1 | E:2 | E:3 | E:1 | E:2 | E:3 | E:1 | E:2 |
|-----|-----|-----|-----|-----|-----|-----|-----|-----|-----|-----|
| R:1 | R:1 | R:1 | R:2 | R:2 | R:2 | R:3 | R:3 | R:3 | R:1 | R:1 |

TEMPS

E: POSITION ANGULAIRE DE L'ANTENNE D'ÉMISSION
R: POSITION ANGULAIRE DE L'ANTENNE DE RÉCEPTION

## FIG.4

```
            ┌─────────────────────┐
            │  MISE EN ROTATION DE │
            │  L'ANTENNE D'ÉMISSION│
            │         A_E1         │
            └──────────┬──────────┘
                       │
            ┌──────────┴──────────┐
            │ POSITIONNER L'ANTENNE│
            │    DE RÉCEPTION      │
            │         A_R1         │
            └──────────┬──────────┘
                       │
            ┌──────────┴──────────┐
            │ OBSERVER LA ROTATION │
            │   DU FAISCEAU DE     │
            │ L'ANTENNE D'ÉMISSION │
            │         A_E2         │
            │  MÉMORISER W_max(Pi) │
            └──────────┬──────────┘
```

MISE EN ROTATION DE L'ANTENNE D'ÉMISSION $A_{E1}$

POSITIONNER L'ANTENNE DE RÉCEPTION $A_{R1}$

OBSERVER LA ROTATION DU FAISCEAU DE L'ANTENNE D'ÉMISSION $A_{E2}$ MÉMORISER $W_{max}(Pi)$

L'ANTENNE D'ÉMISSION A COUVERT SON SECTEUR ANGULAIRE ?

NON

OUI

NOUVELLE POSITION POUR $A_{R1}$

L'ANTENNE DE RÉCEPTION A BALAYÉ SON SECTEUR ?

NON

OUI

RECHERCHE DE LA VALEUR MAXIMALE DE LA PUISSANCE REÇUE

DÉDUIRE LA POSITION DE L'ANTENNE DE RÉCEPTION ET ALIGNER L'ANTENNE D'ÉMISSION

FIG.5

# FIG.6

**Office européen
des brevets**

**RAPPORT DE RECHERCHE EUROPEENNE**

Numéro de la demande

EP 02 10 2698

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 3 511 998 A (SMOKLER MELVIN I) 12 mai 1970 (1970-05-12) * abrégé; figures 1A,1B * * colonne 2, ligne 6 - ligne 29 * * colonne 2, ligne 60 - colonne 3, ligne 27 * * colonne 4, ligne 53 - colonne 5, ligne 71 * * colonne 6, ligne 43 - colonne 7, ligne 3 * | 1,13 | H01Q1/12 G01S3/44 |
| A | FR 2 581 798 A (ALCATEL THOMSON FAISCEAUX) 14 novembre 1986 (1986-11-14) * abrégé; figures 1,3 * * page 2, ligne 9 - ligne 20 * * page 4, ligne 9 - page 5, ligne 20 * * page 6, ligne 28 - page 8, ligne 26 * | 1,13 | |
| A | US 4 696 053 A (MASTRIANI DENNIS ET AL) 22 septembre 1987 (1987-09-22) * abrégé; figures 1,2,4A * * colonne 3, ligne 30 - colonne 4, ligne 15 * * colonne 4, ligne 62 - colonne 5, ligne 20 * | 1,13 | DOMAINES TECHNIQUES RECHERCHES (Int.Cl.7) H01Q G01S H04B |
| A | US 2 538 063 A (GUY TOUVET) 16 janvier 1951 (1951-01-16) * colonne 2, ligne 16 - ligne 32 * * colonne 5, ligne 48 - ligne 71 * | 1,13 | |

Le présent rapport a été établi pour toutes les revendications

| Lieu de la recherche | Date d'achèvement de la recherche | Examinateur |
|---|---|---|
| LA HAYE | 20 mars 2003 | Niemeijer, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 02 10 2698

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2003

| Document brevet cité au rapport de recherche | | Date de publication | Membre(s) de la famille de brevet(s) | | Date de publication |
|---|---|---|---|---|---|
| US 3511998 | A | 12-05-1970 | AUCUN | | |
| FR 2581798 | A | 14-11-1986 | FR | 2581798 A1 | 14-11-1986 |
| US 4696053 | A | 22-09-1987 | AUCUN | | |
| US 2538063 | A | 16-01-1951 | AUCUN | | |

EPO FORM P0460

Pour tout renseignement concernant cette annexe : voir Journal Officiel de l'Office européen des brevets, No.12/82